# EUROPEAN PATENT APPLICATION

(11) **EP 0 725 232 A2**
(43) Date of publication of application: **07.08.1996**
(21) Application number: 96300708.3
(22) Date of filing: 01.02.1996
(51) Int. Cl.: F16H 57/02, F16D 1/06

(54) **Securing gears to a shaft**

(30) Priority: 03.02.1995 GB 9502206
(71) Applicant: EATON CORPORATION, Cleveland, Ohio 44114 (US)
(72) Inventor: Ashcroft, Darren Michael, Chorley, Lancashire (GB); Sattee, Ajay Kumar, Sale, Cheshire M33 3ED (GB); Howarth, Edwin John, Westhoughton, Bolton, Lancashire (GB)
(74) Representative: Clarke, Geoffrey Howard

(57) **Abstract**

A gear wheel (14) may be secured to a shaft (10) so that the gear will not rotate relative to the shaft by means of a pin (26) which is passed through a hub region (24) of a gear (14). For added security the pin may be peened over so that there is absolutely minimal risk of subsequent dislocation.

## Description

The invention relates to improved means of securing gears to shafts.

It has been found that when gears are mounted on a shaft, for example a layshaft, and secured thereto by welding, that there are under some circumstances failures in the welds, allowing the gears to rotate with respect to the shaft upon which they are mounted. This is undesirable and can lead to damage to the machinery involved, and be particularly serious if the machinery is an internal combustion engine or a transmission.

It is also known that welding components together can cause distortion in the components and it may affect the carefully applied surface hardening finishes. It is therefore desirable to be able to avoid the use of a welding process.

In other known methods of securing a gear to a shaft a key is used, such as a Woodruff key. This method has disadvantages of requiring grooves to be cut on the shaft and the gearwheel. Installation of such a key on the shaft and gear assembly on a production line can be complex.

In other known systems spring steel pins are passed all the way through both gear wheel and shaft. This has the disadvantage of not being a secure fastening system and permits some relative movement of the parts. In addition it has been found such pins are inclined to fatigue and fail.

According to the present invention there is provided a gear wheel and shaft assembly, in which a gear wheel is nonrotatably mounted on a shaft, the gear wheel being provided with a hub region for mounting on the shaft, a toothed region connected to the hub region by a web region, the hub having at least one hole passing through it in a substantially radial direction, the shaft having at least one hole extending into it in a substantially radial direction, the holes being arranged so they may be aligned to receive a securing pin to secure the gear wheel to the shaft (to prevent relative rotation).

A particular advantage of the present invention is that it avoids the need for welding the components and therefore removes the risk of failure of the welds.

It has also been found that the system is relatively easy to apply to a production line process.

When applied at the production assembly stage, the invention, with limited interference fits between the parts would prevent gears from rotating out of timing during service life.

The concept is particularly suitable for gears with extended hubs, but could be applied to gears with shorter hubs if the pins were inserted through the hub and shaft at an angle which is not perpendicular to the axis of the shaft and gear.

Various embodiments of the invention will now be described with reference to the accompanying drawings in which:
Figure 1 shows on embodiment of the present invention;
Figure 2 shows an alternative embodiment of the invention; and
Figures 3 & 4 show prior art arrangements.

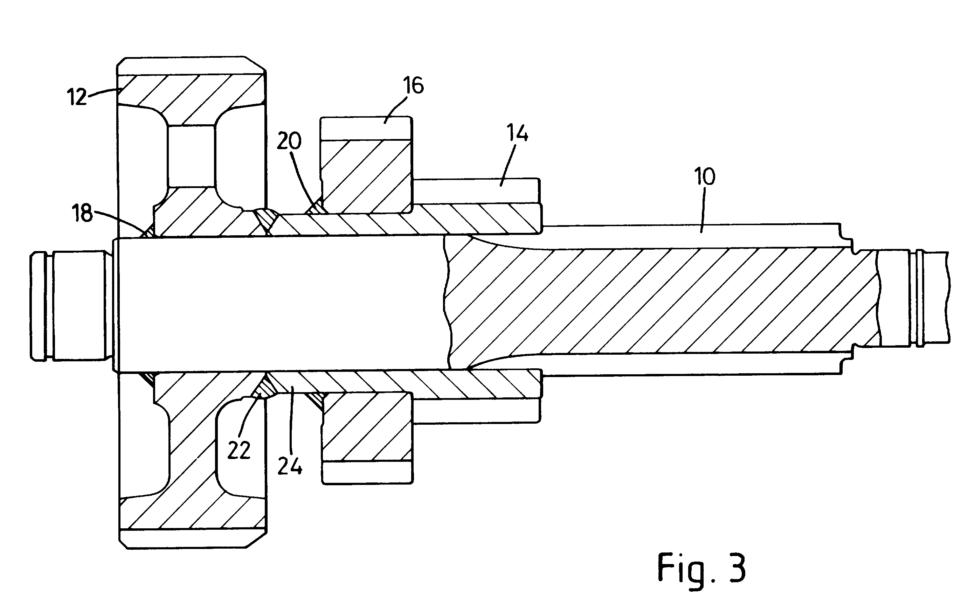

Turning first to the prior art arrangements, Figure 3 shows a side elevation of a layshaft with three spur gears mounted coaxially upon it. The shaft 10 may be supported by one or more bearings (not shown) not forming a part of this invention. A first gear 12 is mounted directly on the shaft and secured to it by a circumferential first fillet weld 18. A second gear 14 with an extended hub 24 is mounted on the shaft 10.

A third gear 16 is mounted on the hub portion 24 of the second gear 14 and secured in non rotatable manner to the hub of the second shaft by a second fillet weld 20. In order to secure the first and second gears 12 and 14 together in a nonrotatable manner a butt weld 22 is used.

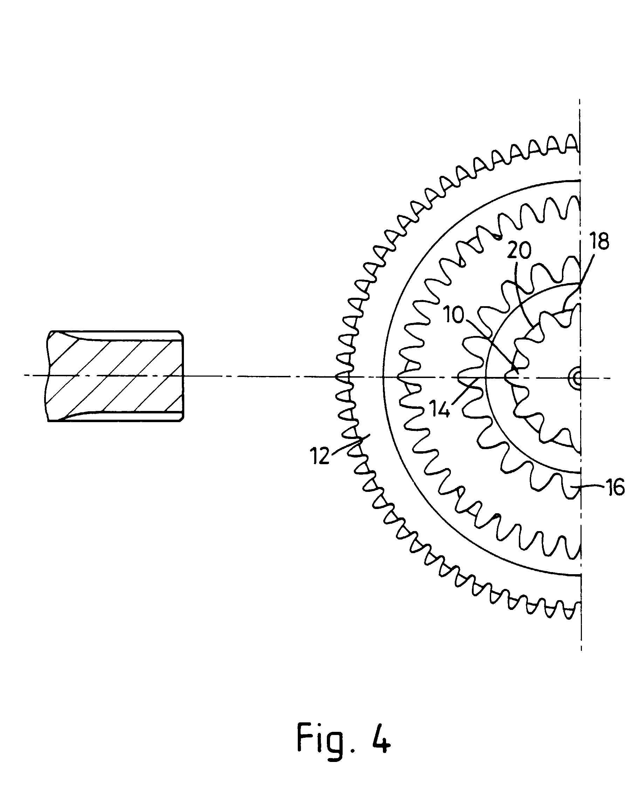

Figure 4 shows an end view of the gears mounted on the shafts and an approximate position of the butt welds.

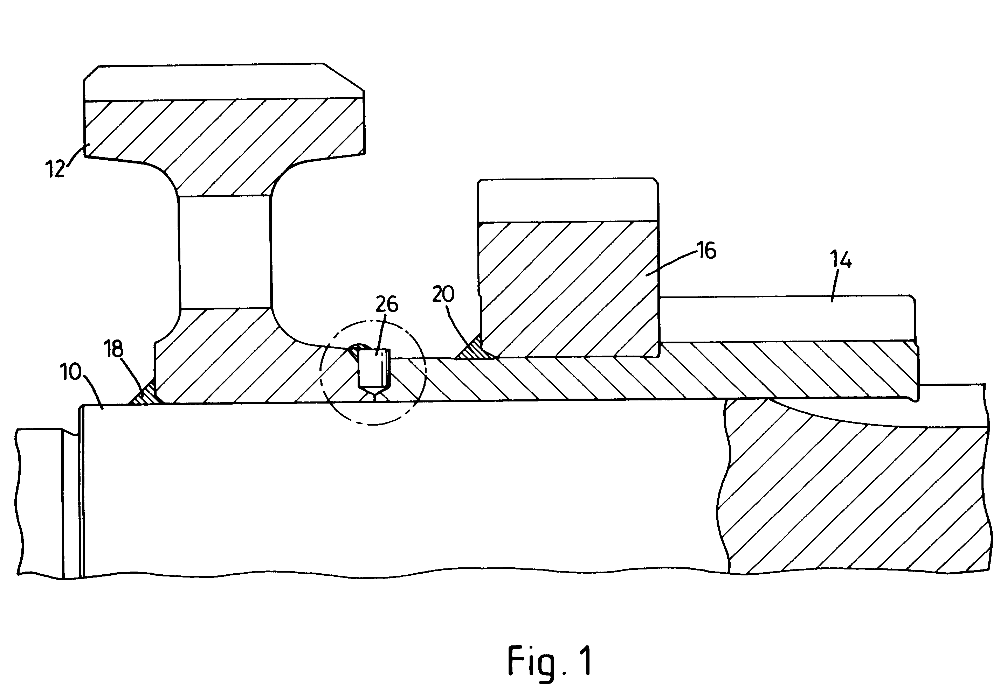

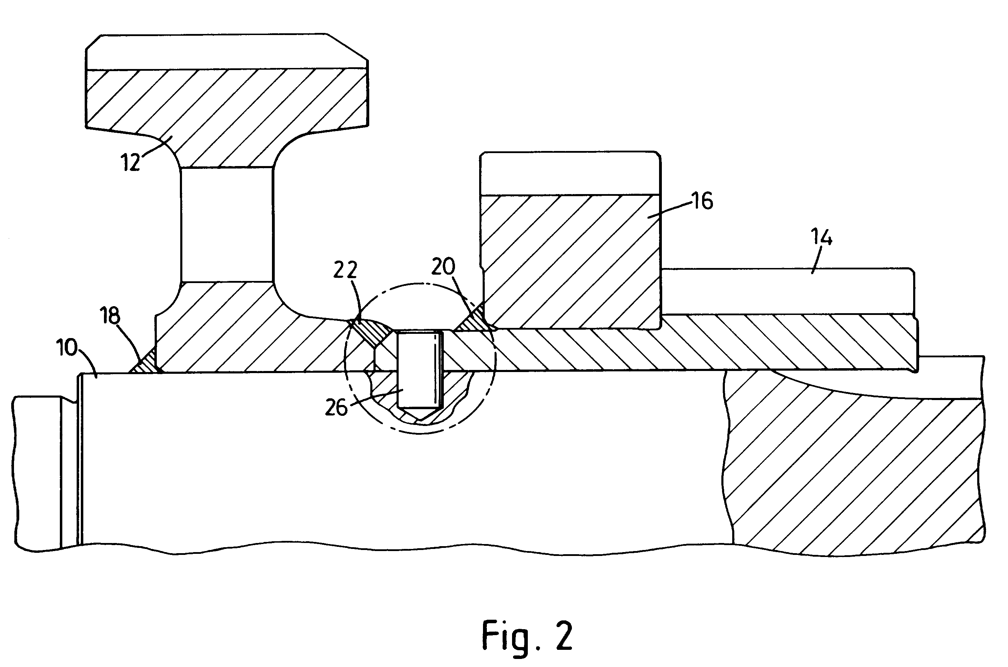

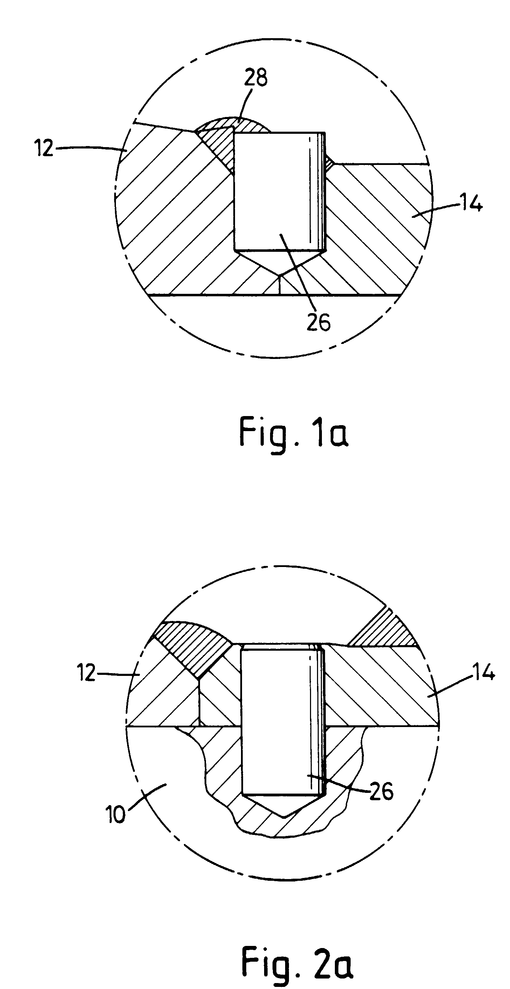

Figure 1 shows one embodiment of the present invention. In this embodiment the butt weld 22 has been replaced by a pin 26 engaging the hub regions of both gears 12 and 14.

Figure 1a shows a detail of the insertion of the pin 26 and a tack weld 28 which may be used for extra security to retain the pin 26 in place.

Figure 2 shows an alternative embodiment in which the pin 26 is passed through the hub of gear 14 and engages the shaft 10. In this embodiment a hole is drilled in the hub of gear 14 and a corresponding hole in shaft 10 and the pin 26 inserted into the holes once they have been aligned.

Figure 2a shows a detail arrangement of figure 2 in which the pin passes through a hub region of gear 14 and into the shaft 10 beneath to lockingly engage the gear and shaft together.

The holes are made to be an interference fit with the pins so that the risk of the pin loosening and consequential dislocation is reduced to a minimum. As an aid to that security the pins could be peened over after installation to ensure no dislocation would occur.

Any number of pins could be used, the number required for any particular application would depend upon the chosen design criteria. Considerations would include the size of the shafts, gears and pins, the amount of torque they were required to transmit and convenience of assembly.

In practice for a transmission for a motor vehicle it has been found that two or three pins are sufficient. The pins used in one embodiment of the present invention have been inserted into shafts of 2 cm and more in diameter. In these examples the pins used have been approximately 10 mm in diameter and 20 mm long. It has been found that pins of a silver steel material provide adequate strength if about half the length of the pin is located in the shaft and half in the hub of the gear.

This invention also provides a very effective means of repairing gears and shafts when a failure of a butt weld and fillet weld has occurred, as well as a very effective means of securing the gears to the shafts on the assembly line.

## Claims

1. A gear wheel and shaft assembly (10.12.14), in which a gear wheel (14) is nonrotatably mounted on a shaft (10), the gear wheel (14) being provided with a hub region (24) for mounting on the shaft (10), a toothed region connected to the hub region by a web region, the hub (24) having at least one hole passing through it in a substantially radial direction, the shaft having at least one hole extending into it in a substantially radial direction, the holes in the hub and the shaft being located so they may be aligned to receive a securing pin (26) to secure the gear wheel to the shaft thereby to prevent relative rotation of the parts.

2. An assembly according to Claim 1 in which the pin (26) has a substantially similar length passing through the gear wheel hub as is engaged in the shaft.

3. An assembly according to Claim 1 or 2 in which the pin is peened to inhibit its removal.

4. An assembly according to any of the preceding claims in which the pin is of a solid construction.

5. An assembly according to either of Claims 1 or 2 in which the pin is engaged in the holes of the gear wheel and shaft with an interference fit.

6. A method of mounting a gear wheel (14) on a shaft (10) so that the gear wheel (14) does not rotate relative to the shaft, the method comprising;
a) forming a hole in a hub region (24) of the gear wheel (14),
b) forming a cooperating hole in the shaft, said holes in the gear wheel and shaft to be in a substantially radial direction and alignable,
c) aligning said first and second holes,
d) inserting a close fitting pin (26) into said holes such that the shaft and gear wheel are coupled so that no relative rotation can occur.
